# EUROPÄISCHE PATENTSCHRIFT

(11) **EP 4 509 808 B1**
(45) Veröffentlichungstag und Bekanntmachung des Hinweises auf die Patenterteilung: **28.10.2026**
(21) Anmeldenummer: 24194546.8
(22) Anmeldetag: 14.08.2024
(51) Int. Cl.: G01K 3/00, F24D 19/10, F24H 9/20, G01K 11/06, G01K 11/12, F24H 15/128

(54) **THERMOREAKTIVES ANZEIGEELEMENT UND VERWENDUNG EINES THERMOREAKTIVEN MATERIALS**
THERMOREACTIVE DISPLAY ELEMENT AND USE OF A THERMOREACTIVE MATERIAL
ÉLÉMENT D'AFFICHAGE THERMORÉACTIF ET UTILISATION D'UN MATÉRIAU THERMORÉACTIF

(30) Priorität: 15.08.2023 DE 102023121810
(43) Veröffentlichungstag der Anmeldung: 19.02.2025
(73) Patentinhaber: Vaillant GmbH, 42859 Remscheid NRW (DE)
(72) Erfinder: Ruthenberg, Christian, 42477 Radevormwald (DE); Steinhaus, Niklas, 42897 Remscheid (DE); Shephard, Ashley, UK3 Pembrey close Norwich., NR3 3QB (GB)
(74) Vertreter: Popp, Carsten

(56) Entgegenhaltungen:
- DE-A1- 102019 004 320
- JP-A- H06 192 527
- JP-U- S50 142 558
- ANONYMOUS: "Temperature at Sight by Change of Color - Temperature Indicator - Irreversible Thermo Labels", 17 October 2016 (2016-10-17), XP093230335, Retrieved from the Internet <URL:https://web.archive.org/web/20161017211545/http://www.sanwatsusho-global.com/product/thermo/temperature_indicator_thermo_label.html> [retrieved on 20241203]

## Beschreibung

Die Erfindung betrifft ein elektrisches Heizgerät und eine Verwendung eines thermoreaktiven Materials.

Elektrische Heizgeräte können sehr variabel eingesetzt werden, beispielsweise zur Erwärmung von Brauchwasser in einem Wasserspeicher oder im Durchlauf als Durchlauferhitzer. Vorteilhaft benötigen diese lediglich eine elektrische Energieversorgung und beanspruchen zudem nur wenig Bauraum. Zudem finden elektrische Heizgeräte häufig Anwendung als Zusatzheizer, bzw. ergänzende Wärmequelle, in Heizungsanlagen mit einer Wärmepumpe oder zur Nutzung von Solarenergie. Unter anderem kann ein elektrisches Heizgerät als Zusatzheizer in einen Heizkreis einer Heizungsanlage eingebunden sein, um einen darin zirkulierenden Wärmeträger zu erwärmen.

Elektrische Heizgeräte weisen in der Regel einen Heizblock auf, der dazu eingerichtet ist, ein Fluid, zumeist Brauch- oder Heizungswasser zu erwärmen. In der Regel sind im Heizblock elektrische Heizelemente, insbesondere widerstandsbasierte Heizelemente angeordnet. Um eine gute Wärmeübertragung auf das Fluid zu ermöglichen sind diese in direkten Kontakt oder in unmittelbarer Umgebung des Fluids angeordnet.

Derartige elektrische Heizgeräte weisen in der Regel eine erhebliche Nennleistung auf. Beispielsweise hat ein Durchlauferhitzer, um eine ausreichende Durchflussmenge Wasser für eine Dusche zu erwärmen, häufig eine Nennleistung von mehr als 15 Kilowatt. Diese hohe Leistung kann zu einer Beschädigung des elektrischen Heizgerätes und insbesondere des Heizblockes führen, wenn nicht ausreichend Fluid vorhanden ist, an das die erzeugte Wärme abgegeben werden kann. Dies wird als Trockenbrand bezeichnet und kann beispielsweise bei Luft in einer Leitung eines Durchlauferhitzers oder einem nicht ausreichend gefüllten Wasserspeicher auftreten. Ein derartiger Durchlauferhitzer wird in der DE 10 2019 004 320 A1 gezeigt.

Zu Vermeidung einer Überhitzung eines Durchlauferhitzers als elektrischem Heizgerät schlägt die DE 10 2019 004 320 A1 vor, ein Vorhandensein von Luftblasen im Fluidkanal des Durchlauferhitzers anhand einer Veränderung des Signals eines Durchflusssensors zu erkennen und die Heizleistung entsprechend anzupassen. Nachteilig hat sich eine Erkennung von Luftblasen anhand des Durchflusssensors als unpräzise erwiesen, oder erfordert einen sehr kostenintensiven Durchflusssensor.

Auch ist aus der DE 10 2015 5206 925 A1 eine Ausgestaltung eines Heizwendels für ein elektrisches Heizgerät bekannt, der eine Überhitzung vermeiden soll.

Aus der KR 10 1 311 169 B1 ist ein transparenter Wassererhitzer mit einer die Farbe ändernde Schicht bekannt, die eine Temperatur des zu erwärmenden Wassers anzeigt. Dabei können mehrere Anzeigebereiches entlang eines Wasserpfades durch den Wassererhitzer angeordnet sein. Eine Erkennung einer Beschädigung des Wassererhitzers ermöglicht diese Lösung nicht.

Die JPS50142558U beschreibt einen Überhitzungsschutz für einen gasbetriebenen Wassererhitzer und eine verbundene Abgasanlage, bei dem eine Überhitzung mittels eines an den Einrichtungen angebrachten Temperaturbadges angezeigt wird. Eine Beschädigung bzw. einen Trockenbrand eines elektrischen Heizgeräts kann diese Lösung nicht anzeigen.

Zudem ist der Einsatz von Sicherheitstemperaturbegrenzern bekannt, die bei Auftreten einer Grenztemperatur den Stromkreis des Heizblockes öffnen und damit eine weitere Erwärmung, die beispielsweise zu einem Wohnungsbrand führen könnte, verhindern. Aufgrund der Reaktionszeit kann jedoch auch ein Temperaturbegrenzer Schäden am elektrischen Heizgerät selbst nicht sicher vermeiden.

Der genannte Stand der Technik versucht eine Überhitzung, beispielsweise bei nicht ausreichendem Fluid zur Aufnahme der erzeugten Wärme, zu vermeiden. Der Stand der Technik kann in der Regel eine Beschädigung des Heizblockes durch einen Trockenbrand nicht vollständig bzw. nicht sicher verhindern. So muss in Folge eines Trockenbrandes der Heizblock und gegebenenfalls die Steuerelektronik ausgetauscht werden, da deren Zustand unbekannt ist und ein weiterer Einsatz ein Sicherheitsrisiko darstellen könnte. Dabei ist häufig jedoch das Auftreten eines Trockenbrandes oder einer Überhitzung am Heizgerät von außen nicht erkennbar.

Hiervon ausgehend ist es Aufgabe der Erfindung, ein elektrisches Heizgerät und eine Verwendung eines thermoreaktiven Materials vorzuschlagen, die die geschilderten Probleme des Standes der Technik zumindest teilweise überwinden. Insbesondere soll die Erfindung einen Trockenbrand des elektrischen Heizgerätes erkennbar zu machen und auch über eine Beschädigung bzw. einen Grad einer Beschädigung des elektrischen Heizgerätes bzw. eines Bauteils desselben informieren.

Zudem soll die Erfindung die Komplexität eines elektrischen Heizgerätes zumindest nicht wesentlich erhöhen, nur geringe bauliche Veränderungen erfordern und/ oder eine einfache Integration in einen bestehenden Produktionsprozess ermöglichen. Zudem soll die Erfindung an bestehenden elektrischen Heizgeräten einfach nachrüstbar sein.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein elektrisches Heizgerät mit einem thermoreaktiven Anzeigeelement zur Anbringung an einer vorgegebenen Position eines vorgegebenen Typs des elektrischen Heizgeräts mit einem Heizblock umfassend Heizelemente bei, die zur Erwärmung eines Fluids eingerichtet sind, wobei die vorgegebene Position einen direkten Rückschluss auf die Temperatur des Heizblockes ermöglicht, und das thermoreaktive Anzeigeelement dazu eingerichtet ist, eine Beschädigung des Heizblockes visuell anzuzeigen.

Bei dem elektrischen Heizgerät kann es sich um ein beliebiges bekanntes elektrisches Heizgerät handeln. Dieses ist zur Erwärmung eines Fluids, wie Trink- oder Brauchwasser, oder auch eines Wärmeträgers eines Heizkreises (Heizungswasser) eingerichtet. Hierzu weist das elektrische Heizgerät einen Heizblock auf, der mindestens ein, zumeist mehrere Heizelemente (Heizdrähte, Heizwendel) umfasst, die in direktem Kontakt mit dem zu erwärmenden Fluid oder in unmittelbarer Nähe zu diesem gebracht sind, und dieses insbesondere widerstandsbasiert erwärmen. So kann eine gute Übertragung eines hohen Wärmestromes von den Heizelementen auf das Fluid bewirkt werden.

Das elektrische Heizgerät kann insbesondere zur Nutzung mit einer Heizung oder zur Warmwasserbereitstellung in einem Gebäude eingerichtet sein. Hierzu kann das elektrische Heizgerät eine Leistung in einem Bereich von 0,5 Kilowatt bis 35 Kilowatt aufweisen. Das Heizgerät kann zur Erwärmung von Wasser in einem Speicher, wie einem Warmwasser- oder einem Pufferspeicher, oder auch zur Erwärmung eines Massestromes Wasser, beispielsweise als Durchlauferhitzer, eingerichtet sein. Insofern kann das elektrische Heizgerät auch Bestandteil eines Wärmespeichers, wie einem Warmwasser- oder Pufferspeicher, sein.

Beispielsweise kann das elektrische Heizgerät ein elektrischer Durchlauferhitzer sein. Dieser kann einen Fluidkanal aufweisen, der durch den Heizblock führt und so einen Fluidstrom Brauchwasser erwärmen, der durch einen Warmwasserauslauf entnommen und einer Armatur eines Waschbeckens oder einer Dusche zugeführt werden kann. Der Heizblock kann mindestens ein Heizelement umfassen, das elektrischen Strom in Wärme umwandeln kann. Das Heizelement kann, insbesondere widerstandsbasiert, elektrische Energie in Wärmeenergie umwandeln. Zumeist sind mehrere Heizelemente vorgesehen, um unterschiedliche elektrische Leistungen zu realisieren. Die Heizelemente können mithilfe von Leistungsschaltern, beispielsweise TRIACs (Triode for Alternating Current) geschaltet und somit in und außer Betrieb genommen werden. Hierfür kann der Durchlauferhitzer ein Regel- und Steuergerät umfassen.

Bei dem elektrischen Heizgerät kann es sich auch um ein Heizgerät für einen Wasserspeicher, wie einem Warmwasserspeicher für Trink- oder Brauchwasser oder einen Pufferspeicher eines Heizkreislaufes handeln. Auch ein derartiges Heizgerät umfasst einen Heizblock mit mindestens einem Heizelement, das in direkten Kontakt oder unmittelbar benachbart zu dem zu erwärmenden Fluid zu bringen ist.

Eine Idee der Erfindung kann darin gesehen werden, mittels eines einfach zu befestigenden thermoreaktiven Anzeigeelementes eine Möglichkeit zur Erkennung eines Trockenbrandes des elektrischen Heizgerätes. Hierfür müssen die temperaturabhängigen Eigenschaften des thermoreaktiven Anzeigeelementes auf dessen (vorgegebene) Position am elektrischen Heizgerät und auf das konkrete elektrische Heizgerät bzw. den konkreten Typ (betreffend Wärmeleistung und Bauform) abgestimmt sein.

Die vorgegebene Position des thermoreaktiven Anzeigeelementes an einem vorgegebenen Typ von elektrischem Heizgerät ist derart gewählt, dass anhand einer Temperatur des thermoreaktiven Anzeigeelementes auf einen Trockenbrand und/ oder eine Beschädigung des elektrischen Heizgeräts und/ oder des Heizblockes rückgeschlossen werden kann.

Verschiedene Kriterien sollten dabei bei der Auswahl einer vorgegebenen Position berücksichtigt werden. So sollte die vorgegebene Position einen möglichst direkten Rückschluss auf eine Temperatur des Heizblockes bzw. des elektrischen Heizgeräts ermöglichen. Dabei sollte eine Erwärmung des thermoreaktiven Anzeigeelementes möglichst mit geringer Zeitverzögerung erfolgen und hierfür eine möglichst direkte Wärmeübertragung vom Heizblock bzw. den Heizelementen desselben auf das thermoreaktive Anzeigeelement gegeben sein. Die Einrichtung des thermoreaktiven Anzeigeelementes für eine vorgegebene Position am elektrischen Heizgerät bezeichnet dabei, dass eine Überhitzung/ ein Trockenbrand des elektrischen Heizgeräts bzw. des Heizblockes eine Erwärmung des thermoreaktive Anzeigeelements an der vorgegebenen Position auf eine Temperatur bewirkt, in der das thermoreaktive Anzeigeelement die Überhitzung visuell durch Auslösen der Thermoreaktion anzeigt/ erkennbar macht. Auch sollte die vorgegebene Position im installierten Zustand des elektrischen Heizgeräts gut (von außen) sichtbar sein. Zudem sollte eine vorgegebene Position gewählt werden, die nur geringen oder keinen äußeren Temperatureinflüssen unterliegt, beispielsweise sollte eine Position in unmittelbarer Nähe zu einer Warmwasserleitung/ einem Heizungsvorlauf gemieden werden.

Eine Korrelation bzw. Übertragungsfunktion zwischen der Temperatur des elektrischen Heizgeräts und insbesondere des Heizblockes/ der Heizelemente mit der Temperatur des thermoreaktiven Anzeigeelementes an dessen vorgegebener Position kann insbesondere mittels (Labor-)Versuchen oder auch Simulationsrechnungen ermittelt werden. Diese Übertragungsfunktion kann dann genutzt werden, ein entsprechendes thermoreaktives Anzeigeelement bzw. die thermoreaktiven Eigenschaften für die visuelle Anzeige einer Überhitzung des elektrischen Heizgeräts auszuwählen.

Zudem ist das thermoreaktive Anzeigeelement für einen vorgegebenen Typ von elektrischem Heizgerät eingerichtet. Ein vorgegebener Typ bezeichnet dabei baugleiche elektrische Heizgeräte, bei denen eine Überhitzung/ ein Trockenbrand ein Erwärmen eines, an der gleichen vorgegebenen Position angeordneten, thermoreaktiven Anzeigeelements auf die (weitestgehend) gleiche Temperatur bewirkt.

Gemäß einer Ausgestaltung kann das thermoreaktive Anzeigeelement ein, bei einer definierten, vorgebbaren Temperatur schmelzbares (sich verflüssigendes) Material umfassen, das im flüssigen Zustand abfließt und einen darunter angeordneten Anzeigebereich sichtbar macht. Der Anzeigebereich ist von dem festen (nicht geschmolzenen) Material verdeckt und damit nicht sichtbar. Hierfür kann vorteilhaft ein nicht transparentes schmelzbares Material gewählt werden.

Bei dem schmelzbaren Material kann es sich beispielsweise um Wachs oder ein Thermoplast handeln. Die Materialeigenschaften und insbesondere die Schmelztemperatur können dabei derart eingestellt sein, dass ein Schmelzvorgang als Funktion der auftretenden Temperatur und der Zeitdauer des Auftretens an der vorgegebenen Position an einem elektrischen Heizgerät von vorgegebenem Typ mit einem Überhitzungsvorgang des elektrischen Heizgeräts korreliert.

Gemäß einer Ausgestaltung kann das thermoreaktive Anzeigeelement mehrere Bereiche mit schmelzbaren Materialien umfassen, die bei unterschiedlichen Temperaturen schmelzen. Vorteilhaft kann so eine vom elektrischen Heizgerät bzw. dem Thermoblock erreichte Temperatur dauerhaft erkennbar gemacht werden. Insbesondere kann der nach einem Abfließen des schmelzbaren Materials sichtbar werdende Anzeigebereich eine hohe Signalwirkung aufweisen, beispielsweise durch seine Farbwahl. Zudem kann der Anzeigebereich einen Text und/ oder ein Symbol umfassen.

Nicht zuletzt ist bei der Auswahl der vorgegebenen Position für ein thermoreaktives Anzeigeelement mit einem schmelzbaren Material darauf zu achten, dass das verflüssigte schmelzbare Material nicht auf einen Bereich oder ein Bauteil des elektrischen Heizgeräts mit einer hohen Temperatur abfließt und somit eine Brandgefahr entsteht. Alternativ kann auch ein schmelzbares Material gewählt werden, das bei den auftretenden Temperaturen nicht entzündbar ist.

Gemäß einer Ausgestaltung kann das thermoreaktive Anzeigeelement eine thermoreaktive Farbe (auch als Thermofarbe, Thermolack oder Thermochromlack bezeichnet) umfassen. Diese kann eine Temperatur durch eine angenommene Farbe bzw. einen angenommenen Farbton erkennbar machen. Auf dem Stand der Technik sind eine Vielzahl geeigneter thermoreaktiver Farben bekannt, so dass ein Fachmann anhand der geforderten Eigenschaften eine geeignete thermoreaktive Farbe auswählen kann.

Gemäß einer Ausgestaltung kann auf dem thermoreaktiven Anzeigeelement umfassend eine thermoreaktive Farbe oder in der Nähe desselben eine Zuordnung/ Bewertungsskala der relevanten auftretenden Farben der thermoreaktiven Farbe zu einer entsprechenden Temperatur und/ oder einer Erläuterung der Temperatur angegeben sein. Die Erläuterung kann beispielsweise eine Überhitzung der entsprechenden Farbe zuordnen. Beispielsweise kann ein, beispielsweise runder Bereich um die thermoreaktive Farbe eine Zuordnung von auftretenden Farben und deren Temperatur bzw. dem entsprechenden Zustand des elektrischen Heizgeräts angeben.

Gemäß einer Ausgestaltung kann die thermoreaktive Farbe zumindest einen der folgenden Zustände anzeigen:
- Überhitzung
- elektrisches Heizgerät ist in (regulärem) Betrieb
- elektrisches Heizgerät ist außer Betrieb.

Dabei können die Zustände (auch) in Abstufungen angegeben werden, beispielsweise könnte der Zustand Überhitzung in drei Abstufungen unterteilt sein, wobei bei der Abstufung mit der höchsten Temperatur mit hoher Sicherheit von einer Beschädigung des elektrischen Heizgeräts ausgegangen werden kann. Eine Abstufung ist in diesem Sinne insbesondere eine Symboldarstellung, wobei z. B. der Zustand Überhitzung in den Abstufungen gering (z.B. mittels einer Farbe GRAU), mittel (z.B. mittels einer Farbe GELB) und hoch (z.B. mittels einer Farbe ORANGE) gekennzeichnet wird bzw. werden kann.

Gemäß einer Ausgestaltung kann das thermoreaktive Anzeigeelement ein Aufkleber sein. Ein Aufkleber bezeichnet hier ein Trägermaterial, beispielsweise ein Papier oder einen Kunststoff, auf dem das thermoreaktive Material und gegebenenfalls ein Anzeigebereich aufgebracht ist. Auf der dem thermoreaktiven Material gegenüberliegenden Seite des Trägermaterials kann ein, insbesondere ablösbarer, Klebstoff aufgebracht sein. Vorteilhaft kann so ein thermoreaktive Anzeigeelement mit einem schmelzbaren Material nach dessen Schmelzen auf einfache Weise erneuert werden oder auch ein thermoreaktives Anzeigeelement an bestehenden elektrischen Heizgeräten nachgerüstet werden.

Alternativ kann das thermoreaktive Anzeigeelement, insbesondere eine thermoreaktive Farbe auch direkt auf die vorgegebene Position aufgebracht sein, beispielsweise mittels eines Druckverfahrens.

Gemäß einer Ausgestaltung kann ein thermoreaktives Anzeigeelement auch mindestens einen Bereich mit einer thermoreaktiven Farbe und mindestens einen Anzeigebereich mit einem schmelzbaren thermoreaktiven Material umfassen.

Nach einem weiteren Aspekt wird ein elektrisches Heizgerät vorgeschlagen, umfassend zumindest einen Heizblock mit mindestens einem elektrischen Heizelement, dazu eingerichtet ein Fluid mittels elektrischer Energie zu erwärmen. Das elektrische Heizgerät weist zudem ein hier beschriebenes thermoreaktive Anzeigeelement, angeordnet bzw. befestigt an einer vorgegebenen Position, die einen direkten Rückschluss auf eine Temperatur des Heizblockes ermöglicht, auf. Das thermoreaktive Anzeigeelement ist auf den Typ (die Bauform und elektrische Leistung) des elektrischen Heizgeräts und die vorgegebene Position zur Anbringung am elektrischen Heizgerät eingerichtet.

Gemäß einer Ausgestaltung kann das elektrische Heizgerät mehrere thermoreaktive Anzeigeelemente aufweisen. Insbesondere kann mindestens ein thermoreaktives Anzeigeelement umfassend eine thermoreaktive Farbe und mindestens ein thermoreaktives Anzeigeelement umfassend ein schmelzbares Material vorgesehen sein. Zudem können auch thermoreaktive Anzeigeelemente an unterschiedlichen vorgegebenen Positionen des elektrischen Heizgeräts vorgesehen sein. Eine derartige redundante Nutzung von thermoreaktiven Anzeigeelementen kann die Sicherheit der Anzeige bzw. der Erkennbarkeit einer Überhitzung/ eines Trockenbrandes erhöhen.

Gemäß einer Ausgestaltung kann das mindestens ein thermoreaktive Anzeigeelement auf einem Gehäuse des elektrischen Heizgeräts an einer von außen sichtbaren (vorgegebenen) Position befestigt sein. Eine geeignete vorgegebene Position könnte an der Außenseite, insbesondere Vorderseite, des Gehäuses in unmittelbarer Nähe des Heizblockes/ des mindestens Heizelementes sein. So kann ein schnelles Erreichen der für die Thermoreaktion des thermoreaktiven Anzeigeelementes notwendigen Temperatur sichergestellt werden. Vorteilhaft unterliegt die Übertragung der Wärme auf das thermoreaktive Anzeigeelement nur geringen Fremdeinflüssen.

Gemäß einer Ausgestaltung kann ein thermoreaktives Anzeigeelement auch innerhalb des Gehäuses des elektrischen Heizgerätes angeordnet sein. Ein Beispiel hierfür wäre eine Befestigung an dem Heizblock, insbesondere an einer Vorderseite des Gehäuses des elektrischen Heizgerätes zugewandten äußeren Oberfläche des Heizblockes. So kann eine besonders schnelle Reaktion des thermoreaktiven Anzeigeelementes bewirkt werden. Gemäß einer weiterführenden Ausgestaltung kann das Gehäuse des elektrischen Heizgerätes ein Sichtfenster aufweisen, durch das das im Inneren des Gehäuses angeordnete thermoreaktive Anzeigeelement von außen (außerhalb des Gehäuses) sichtbar ist.

Nach einem weiteren Aspekt wird auch eine Verwendung eines thermoreaktiven Materials angeordnet an einer vorgegebenen Position an einem vorgegebenen Typ eines elektrischen Heizgerätes mit einem Heizblock zur Anzeige eines Trockenbrandes des Heizblocks des elektrischen Heizgerätes vorgeschlagen. Bei dem thermoreaktiven Material kann es sich insbesondere um ein bei einer vorgegebenen Temperatur schmelzbares (sich verflüssigendes) Material und/ oder eine thermoreaktive Farbe handeln. Das elektrische Heizgerät kann insbesondere zur Erwärmung eines Fluids, wie Trink- oder Brauchwasser oder einen Wärmeträger eines Heizkreises (Heizungswasser) einer Heizungsanlage eingerichtet sein. Hierfür kann das elektrische Heizgerät einen Heizblock mit mindestens einem Heizelement umfassen, dass in direktem Kontakt oder in unmittelbare Nähe des zu erwärmenden Fluids gebracht ist.

Die im Zusammenhang mit dem thermoreaktiven Anzeigeelement erörterten Details, Merkmale und Ausgestaltungen können entsprechend auch bei einem hier vorgeschlagenen elektrischen Heizgerät und/ oder der Verwendung auftreten und umgekehrt. Insoweit wird auf die dortigen Ausführungen zur näheren Charakterisierung der Merkmale vollumfänglich Bezug genommen.

Hier werden somit ein elektrisches Heizgerät sowie eine Verwendung angegeben, welche die mit Bezug auf den Stand der Technik geschilderten Probleme zumindest teilweise lösen. Insbesondere tragen das elektrischen Heizgerät und die Verwendung zumindest dazu bei, eine Beschädigung und/ oder einen Betriebszustand eines elektrischen Heizgerätes sichtbar bzw. erkennbar zu machen. Besonders vorteilhaft ist ein hier vorgeschlagenes Heizgerät sehr kostengünstig herstellbar und einfach zu installieren.

Zudem erfordert das vorgeschlagene Verfahren vorteilhaft nur sehr geringe baulichen Änderungen an einem elektrischen Heizgerät und ist problemlos an bestehenden elektrischen Heizgeräten nachrüstbar.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist darauf hinzuweisen, dass die Figuren und insbesondere die dargestellten Größenverhältnisse nur schematisch sind. Es zeigen:
- Fig. 1:: ein hier vorgestelltes elektrisches Heizgerät,
- Fig. 2:: ein thermoreaktives Anzeigeelement,
- Fig. 3:: das thermoreaktive Anzeigeelement aus Fig. 2 nach Auftreten einer Überhitzung, und
- Fig. 4:: eine alternative Ausgestaltung eines hier vorgestellten thermoreaktiven Anzeigeelementes.

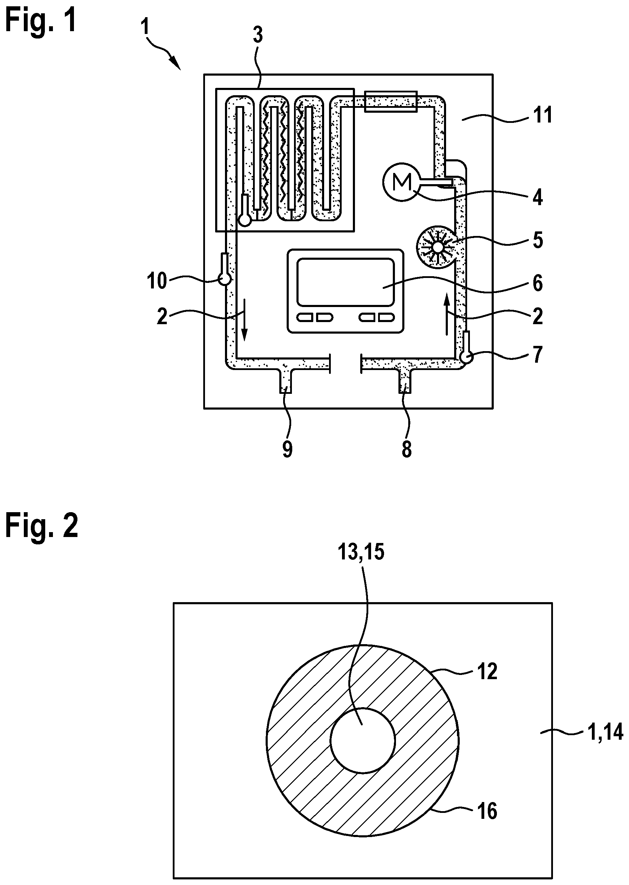

Fig. 1 zeigt beispielhaft und schematisch ein elektrisches Heizgerät 1, ausgeführt als Durchlauferhitzer zur Erwärmung eines Fluidstromes, insbesondere eines Wasserstromes, der durch einen Kaltwasserzulauf 8 dem elektrischen Heizgerät 1 zugeführt und durch einen Warmwasserauslauf 9 entnommen werden kann, wobei der Fluidstrom das elektrische Heizgerät 1 in einer Durchströmungsrichtung 2 durchströmt. Ein Fluidkanal 1 kann von dem zu erwärmenden Fluid vom Kaltwasserauslauf 8 zum Warmwasserauslauf 9 durchströmt werden. Zudem kann das elektrische Heizgerät 1 einen ersten Temperatursensor 7 im Kaltwasserzulauf 8, einen Durchflusssensor 5 im Fluidkanal 11, ein Motorventil 4 und einen zweiten Temperatursensor 10 im Warmwasserauslauf 9 umfassen, deren Signale zur Regelung und Steuerung des elektrischen Heizgeräts 1 herangezogen werden können. Mittels des Motorventils 4 kann die Durchflussmenge des Fluids gedrosselt werden, um eine kontante, gewünschte Temperatur am Warmwasserauslauf 9 zu gewährleisten, wenn der Heizblock 3 mit Nennleistung betrieben wird.

Das elektrische Heizgerät 1 kann einen Heizblock 3 umfassen, aufweisend widerstandsbasierte Heizelemente, die in direktem Kontakt mit dem Fluidstrom stehen können. Bei einem Betreiben der Heizelemente des Heizblockes 3 mit Luft im Fluidkanal 11 kann es zu einem Trockenbrand kommen, bei dem die Heizelemente, der Heizblock 3 und/ oder eine Steuerelektronik beispielsweise ein Regel- und Steuergerät 6 des elektrischen Heizgeräts 1 beschädigt werden können. Für den Fall einer Überhitzung/ eines Trockenbrandes der Heizelemente/ des Heizblockes 3 kann das elektrische Heizgerät 1 einen (hier nicht gezeigten) Sicherheitstemperaturbegrenzer umfassen, der bei einem Überschreiten einer Grenztemperatur die Stromversorgung des Heizblockes 3 unterbricht und damit eine weitere Erwärmung verhindert. Nachteilig erfolgt dies häufig mit einer zeitlichen Verzögerung, so dass der Sicherheitstemperaturbegrenzer lediglich Folgeschäden, wie ein Entzünden des elektrischen Heizgeräts 1 oder Gegenständen in der Umgebung, nicht jedoch eine Beschädigung des Heizblockes 3 verhindern kann.

Fig. 2 zeigt beispielhaft und schematisch ein thermoreaktives Anzeigeelement 16, angebracht an einer vorgegebenen Position 12 auf einer, bezogen auf die Installationsposition, Vorderseite der Außenfläche eines Gehäuses 14 des elektrischen Heizgeräts 1. Das thermoreaktive Anzeigeelement 16 kann ein thermoreaktives Material 13 umfassen, hier ausgeführt als ein schmelzbares thermoreaktives Material 15. In Fig. 2 wird das thermoreaktive Anzeigeelement 16 in einem Zustand, in dem keine Überhitzung / kein Trockenbrand aufgetreten ist, gezeigt.

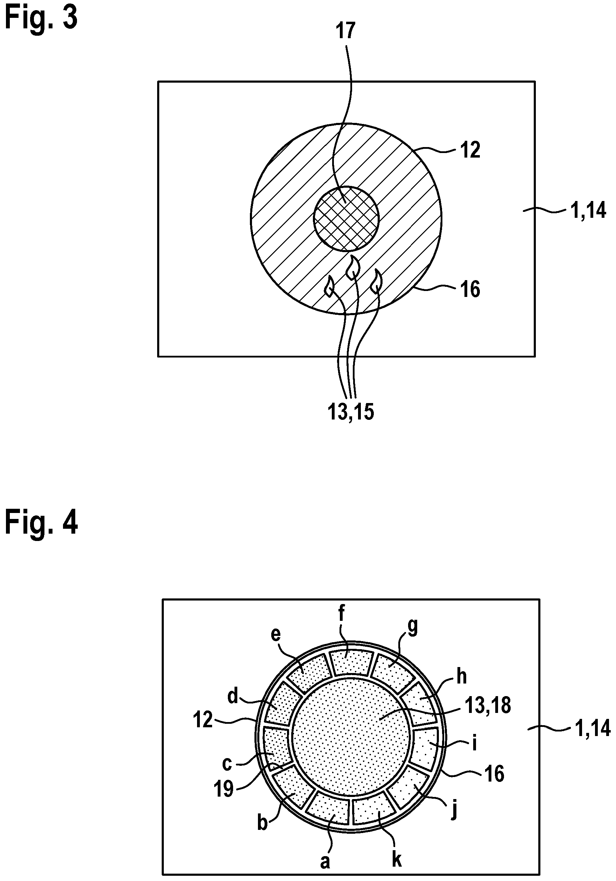

Fig. 3 zeigt gleichfalls beispielhaft und schematisch das thermoreaktive Anzeigeelement 16 aus Fig. 2 nach dem Auftreten eines Trockenbrandes, wodurch das schmelzbare thermoreaktive Material 15 schmelzen kann und abfließt. Dadurch kann ein Anzeigebereich 17 sichtbar werden, der vor dem Auftreten der Überhitzung vom den schmelzbaren thermoreaktiven Material 15 verdeckt war. Der Anzeigebereich 17 kann eine Signalwirkung aufweisen, so dass die Aufmerksamkeit eines Nutzers erregt wird.

Fig. 4 zeigt beispielhaft und schematisch eine alternative Ausgestaltung eines thermoreaktiven Anzeigeelementes 16, das gleichfalls an einer vorgegebenen Position 12 auf der Außenfläche des Gehäuses 14 des elektrischen Heizgeräts 1 angeordnet sein kann. Das thermoreaktive Anzeigeelement 16 kann mittig ein thermoreaktives Material 13 umfassen, hier ausgebildet als eine thermoreaktive Farbe 18. In einer kreisrunden Form um die thermoreaktive Farbe 18 kann eine Bewertungsskala 19 angeordnet sein. Diese kann Beispielfarben a bis k zum Vergleichen mit der aktuellen Farbe der thermoreaktiven Farbe 18 umfassen, denen ein Zustand des elektrischen Heizgeräts 1 oder eine konkrete Temperaturangabe zugeordnet sein kann.

Die thermoreaktiven Anzeigeelemente 16 gemäß den Fig. 2 bis 4 können als Aufkleber ausgebildet sein, also auf einem Trägermaterial angeordnet sein, dass einen ablösbaren Klebstoff umfasst. So kann ein einfaches Anbringen und Entfernen der thermoreaktiven Anzeigeelemente 16 bewirkt werden.

### Bezugszeichenliste

- 1: elektrisches Heizgerät
- 2: Durchströmungsrichtung
- 3: Heizblock
- 4: Motorventil
- 5: Durchflusssensor
- 6: Regel- und Steuergerät
- 7: erster Temperatursensor
- 8: Kaltwasserzulauf
- 9: Warmwasserauslauf
- 10: zweiter Temperatursensor
- 11: Fluidkanal
- 12: vorgegebene Position
- 13: thermoreaktives Material
- 14: Gehäuse
- 15: schmelzbares thermoreaktives Material
- 16: thermoreaktive Anzeigeelement
- 17: Anzeigebereich
- 18: thermoreaktive Farbe
- 19: Bewertungsskala

## Patentansprüche

1. Elektrisches Heizgerät (1) umfassend ein thermoreaktives Anzeigeelement (16) angebracht an einer vorgegebenen Position (12) des elektrischen Heizgeräts (1) mit einem Heizblock (3) umfassend Heizelemente, die zur Erwärmung eines Fluids eingerichtet sind, wobei die vorgegebene Position einen direkten Rückschluss auf eine Temperatur des Heizblocks (3) ermöglicht, und das thermoreaktive Anzeigeelement (16) dazu eingerichtet ist, eine Beschädigung des Heizblockes (3) visuell anzuzeigen.

2. Elektrisches Heizgerät (1) nach Anspruch 1, wobei die vorgegebene Position (12) des thermoreaktiven Anzeigeelementes (16) am vorgegebenen Typ des elektrischen Heizgeräts (1) derart gewählt ist, dass anhand einer Temperatur des thermoreaktiven Anzeigeelementes (16) auf eine Beschädigung des elektrischen Heizgeräts (1) und/ oder des Heizblockes (3) des elektrischen Heizgeräts (1) rückgeschlossen werden kann.

3. Elektrisches Heizgerät (1) nach einem der vorangehenden Ansprüche, umfassend ein bei einer vorgegebenen Temperatur schmelzendes thermoreaktives Material (15), das durch das Schmelzen einen darunter angeordneten Anzeigebereich (17) sichtbar macht.

4. Elektrisches Heizgerät (1) nach einem der vorangehenden Ansprüche, umfassend eine thermoreaktive Farbe (18), die eine aufgetretene Temperatur durch eine angenommene Farbe anzeigt.

5. Elektrisches Heizgerät (1) nach Anspruch 4, wobei die thermoreaktive Farbe (18) zumindest einen der folgenden Zustände anzeigt:
- Überhitzung
- elektrisches Heizgerät (1) in Betrieb,
- elektrisches Heizgerät (1) außer Betrieb.

6. Elektrisches Heizgerät (1) nach Anspruch 5, wobei mindestens einer der Zustände in Abstufungen angezeigt wird.

7. Elektrisches Heizgerät (1) nach einem der Ansprüche 4 bis 6, wobei das thermoreaktive Anzeigeelement (16) eine Bewertungsskala (19) umfasst, die eine relevante möglicherweise auftretende Farbe der thermoreaktiven Farbe (18) einem Zustand des elektrischen Heizgeräts (1) zuordnet.

8. Elektrisches Heizgerät (1) nach einem der vorangehenden Ansprüche, wobei das thermoreaktive Anzeigeelement (16) ein Aufkleber ist.

9. Elektrisches Heizgerät (1) nach einem der vorangehenden Ansprüche, wobei eine vorgegebene Position des thermoreaktiven Anzeigeelementes (16) von außen sichtbar an einem Gehäuse (14) des elektrischen Heizgeräts (1) ist.

10. Elektrisches Heizgerät (1) nach einem der vorangehenden Ansprüche, wobei eine vorgegebene Position (12) eines thermoreaktiven Anzeigeelementes (16) innerhalb des Gehäuses (14) des elektrischen Heizgeräts (1) ist.

11. Elektrisches Heizgerät (1) nach Anspruch 10, wobei ein thermoreaktives Anzeigeelement (16) durch ein Sichtfenster im Gehäuse (14) des elektrischen Heizgeräts (1) von außen sichtbar ist.

12. Elektrisches Heizgerät (1) nach einem der vorangehenden Ansprüche, wobei mindestens eine vorgegebene Position (12) eines thermoreaktiven Anzeigeelementes (16) am elektrischen Heizgerät (1) eine Markierung aufweist.

13. Verwendung eines thermoreaktiven Materials (13) angeordnet an einer vorgegebenen Position (12) an einem vorgegebenen Typ eines elektrischen Heizgeräts (1) mit einem Heizblock (3) zur Anzeige eines Trockenbrandes des Heizblockes (3) des elektrischen Heizgeräts (1).

## Claims

1. An electric heating appliance (1) comprising a thermoreactive display element (16) mounted at a predetermined position (12) on the electric heating appliance (1) having a heating block (3) comprising heating elements arranged to heat a fluid, wherein the predetermined position allows a direct indication of the temperature of the heating block (3), and the thermoreactive display element (16) is arranged to visually indicate damage to the heating block (3).

2. Electric heating appliance (1) according to claim 1, wherein the predetermined position (12) of the thermoreactive indicator element (16) on the predetermined type of electric heating appliance (1) is selected such that, on the basis of the temperature of the thermoreactive indicator element (16), it is possible to infer damage to the electric heating appliance (1) and/or to the heating block (3) of the electric heating appliance (1).

3. An electric heating appliance (1) according to one of the preceding claims, comprising a thermoreactive material (15) which melts at a predetermined temperature and, upon melting, reveals an indicator area (17) situated beneath it.

4. An electric heating appliance (1) according to one of the preceding claims, comprising a thermoreactive dye (18) which indicates a temperature that has been reached by changing colour.

5. An electric heating appliance (1) according to claim 4, wherein the thermoreactive paint (18) indicates at least one of the following states:
- overheating
- the electric heating appliance (1) is in operation,
- electric heating appliance (1) switched off.

6. Electric heating appliance (1) according to claim 5, wherein at least one of the states is displayed in gradations.

7. An electric heating appliance (1) according to any one of claims 4 to 6, wherein the thermoreactive display element (16) comprises a rating scale (19) which assigns a relevant colour that may appear in the thermoreactive colour (18) to a state of the heating appliance (1).

8. An electric heating appliance (1) according to one of the preceding claims, wherein the thermoreactive display element (16) is a sticker.

9. An electric heating appliance (1) according to one of the preceding claims, wherein a predetermined position of the thermoreactive indicator element (16) is visible from the outside on a housing (14) of the electric heating appliance (1).

10. An electric heating appliance (1) according to one of the preceding claims, wherein a predetermined position (12) of a thermoreactive indicator element (16) is located within the housing (14) of the electric heating appliance (1).

11. An electric heating appliance (1) according to claim 10, wherein a thermoreactive indicator element (16) is visible from the outside through a viewing window in the housing (14) of the electric heating appliance (1).

12. An electric heating appliance (1) according to one of the preceding claims, wherein at least one predetermined position (12) of a thermoreactive indicator element (16) on the electric heating appliance (1) comprises a marking.

13. Use of a thermoreactive material (13) arranged at a predetermined position (12) on a predetermined type of electric heating appliance (1) comprising a heating block (3), for indicating dry firing of the heating block (3) of the electric heating appliance (1).

## Revendications

1. Appareil de chauffage électrique (1) comprenant un élément d'affichage thermoréactif (16) appliqué sur une position prédéfinie (12) de l'appareil de chauffage électrique (1) avec un bloc de chauffage (3) comprenant des éléments de chauffage qui sont configurés pour chauffer un fluide, dans lequel la position prédéfinie permet de déduire directement une température du bloc de chauffage (3), et l'élément d'affichage thermoréactif (16) est configuré pour afficher visuellement un endommagement du bloc de chauffage (3).

2. Appareil de chauffage électrique (1) selon la revendication 1, dans lequel la position prédéfinie (12) de l'élément d'affichage thermoréactif (16) sur le type prédéfini d'appareil de chauffage électrique (1) est sélectionnée de sorte qu'une température de l'élément d'affichage thermoréactif (16) permet de déduire un endommagement de l'appareil de chauffage électrique (1) et/ou du bloc de chauffage (3) de l'appareil de chauffage électrique (1).

3. Appareil de chauffage électrique (1) selon l'une quelconque des revendications précédentes, comprenant un matériau thermoréactif (15) fondant à une température prédéfinie qui, en fondant, rend visible une zone d'affichage (17) disposée en dessous.

4. Appareil de chauffage électrique (1) selon l'une quelconque des revendications précédentes, comprenant une couleur thermoréactive (18) qui affiche une température apparue via une couleur adoptée.

5. Appareil de chauffage électrique (1) selon la revendication 4, dans lequel la couleur thermoréactive (18) affiche au moins l'un des états suivants :
- surchauffe
- appareil de chauffage électrique (1) en service,
- appareil de chauffage électrique (1) hors service.

6. Appareil de chauffage électrique (1) selon la revendication 5, dans lequel au moins l'un des états est affiché par gradations.

7. Appareil de chauffage électrique (1) selon l'une quelconque des revendications 4 à 6, dans lequel l'élément d'affichage thermoréactif (16) comprend une échelle d'évaluation (19) qui associe une couleur pertinente pouvant apparaître de la couleur thermoréactive (18) à un état de l'appareil de chauffage électrique (1).

8. Appareil de chauffage électrique (1) selon l'une quelconque des revendications précédentes, dans lequel l'élément d'affichage thermoréactif (16) est un autocollant.

9. Appareil de chauffage électrique (1) selon l'une quelconque des revendications précédentes, dans lequel une position prédéfinie de l'élément d'affichage thermoréactif (16) est visible de l'extérieur sur un boîtier (14) de l'appareil de chauffage électrique (1).

10. Appareil de chauffage électrique (1) selon l'une quelconque des revendications précédentes, dans lequel une position prédéfinie (12) d'un élément d'affichage thermoréactif (16) est à l'intérieur du boîtier (14) de l'appareil de chauffage électrique (1).

11. Appareil de chauffage électrique (1) selon la revendication 10, dans lequel un élément d'affichage thermoréactif (16) est visible de l'extérieur à travers une fenêtre de visualisation dans le boîtier (14) de l'appareil de chauffage électrique (1).

12. Appareil de chauffage électrique (1) selon l'une quelconque des revendications précédentes, dans lequel au moins une position prédéfinie (12) d'un élément d'affichage thermoréactif (16) présente un repère sur l'appareil de chauffage électrique (1).

13. Utilisation d'un matériau thermoréactif (13) disposé à une position prédéfinie (12) sur un type prédéfini d'un appareil de chauffage électrique (1) avec un bloc de chauffage (3) pour l'affichage d'un fonctionnement à sec du bloc de chauffage (3) de l'appareil de chauffage électrique (1).
